# EUROPÄISCHE PATENTSCHRIFT

(11) **EP 3 285 105 B1**
(45) Veröffentlichungstag und Bekanntmachung des Hinweises auf die Patenterteilung: **10.06.2020**
(21) Anmeldenummer: 17001242.1
(22) Anmeldetag: 20.07.2017
(51) Int. Cl.: G02B 6/44, H04Q 1/02

(54) **GLASFASER-NETZVERTEILER**
FIBREGLASS NETWORK DISTRIBUTOR
DISTRIBUTEUR RÉSEAU EN FIBRE DE VERRE

(30) Priorität: 19.08.2016 DE 102016009977
(43) Veröffentlichungstag der Anmeldung: 21.02.2018
(73) Patentinhaber: Langmatz GmbH, 82467 Garmisch-Partenkirchen (DE)
(72) Erfinder: LUDWIG, Fischer, 82497 Oberammergau (DE); SCHUSTER, Axel, 82467 Garmisch-Partenkirchen (DE); BRUWELEIT, Stefan, 82377 Penzberg (DE)
(74) Vertreter: Flosdorff, Jürgen

(56) Entgegenhaltungen:
- EP-A1- 2 661 092
- CN-U- 203 275 726
- DE-U1-202013 102 267
- US-A1- 2008 031 585
- US-A1- 2012 093 473
- US-A1- 2013 230 291

## Beschreibung

Die Erfindung betrifft einen Glasfaser-Netzverteiler, der ein Innengerüst mit einer rückwärtigen Innenwand aufweist, und mit einer Bodenplatte, durch die Glasfaserkabel zugeführt werden. Die zugeführten Glasfasern werden über Kassettensysteme abgelegt und mit den abgehenden Glasfasern verbunden und dann über beispielsweise Mikro-Pipes-Röhrchen, welche wiederum über die Bodenplatte in den Sockel und weiter zu den Verbrauchern geführt werden. Der Glasfaser-Netzverteiler ruht meist auf einem Sockel auf, durch den die Zugangskabel und die gespleißten Glasfasern verlaufen. Außerdem enthält der Glasfaser-Netzverteiler ein Außengehäuse, das zwei Seitenwände, eine Rückwand, eine obere Wand und eine schwenkbare Gehäusetür enthält und haubenartig über dem Innengerüst und der rückwärtigen Innenwand angeordnet ist. In dem Glasfaser-Netzverteiler sind außerdem die Kassettensysteme für das Kassettenmanagement, insbesondere Herstellen von Spleißverbindungen, aber auch Patchverbindungen zwischen Glasfasern, angeordnet, so dass die Glasfasern in dem Glasfaser-Netzverteiler gespleißt und abgelegt werden können.

Ein derartiger Glasfaser-Netzverteiler ist aus der EP 2 661 092 A1 bekannt. Bei diesem Netzverteiler bildet die rückwärtige Innenwand, an der die Zugangskabel und die abgehenden Glasfaserkabel mittels Kabelführungselementen befestigt werden, eine erste, hintere Montageebene in dem Netzverteilerschrank. Außerdem ist eine zweite, von der hinteren Montageebene getrennte Montageebene ausgebildet, indem eine schwenkbare Innentür an dem Innengerüst befestigt ist, die an ihrer Vorderseite die Kassettensysteme für das Kassettenmanagement enthält. Diese Innentür des bekannten Glasfaser-Netzverteilers ist in Blickrichtung zu dem Netzverteilerschrank an der linken Seite an dem Innengerüst angelenkt. Die ankommenden und die abgehenden Glasfaserkabel werden entweder durch einen Zwischenraum zwischen dem Anschlag der Innentür und der Seitenwand des Außengehäuses oder über die Oberseite der Tür hinweg zwischen der rückwärtigen Innenwand und den Kassettensystemen an der Vorderseite der Innentür geführt. Das Außengehäuse des Glasfaser-Netzverteilerschranks ist nach einer evtl. Beschädigung abnehmbar und austauschbar, ohne dass der Glasfaser-Netzverteiler abgeschaltet werden muss. Bei dem Glasfaser-Management muss die Arbeitsperson bei der Verlegung der Glasfaserkabeln von der rückwärtigen Innenwand zu der Vorderseite der Innentüre diese Innentüre hin- und herschwenken, wobei auch die Führung der Glasfasern hinter der Türangel oder über die Oberkante der Tür hinweg die Arbeit erschwert. Es kommt hinzu, dass die Innentür nur um 90° zu öffnen ist und der Bereich der rückwärtigen Innenwand nahe der Türangel schwer zugänglich ist.

Die US 2013/0230291 A1 offenbart einen Verteilerschrank, der kein Innengerüst aufweist. Eine Kassettenhalterung ist direkt an der Tür des Gehäuses über ein Scharnier fest angebracht, womit die Halterung mit den Kassetten zur Inspektion ausgeschwenkt werden kann.

Der vorliegenden Erfindung liegt die Aufgabe zugrunde, einen Glasfaser-Netzverteiler anzugeben, bei dem die Montagearbeiten erleichtert sind, wobei weiterhin zwei räumlich getrennte Montageebenen beibehalten werden sollen. Außerdem soll das Außengehäuse so abnehmbar und austauschbar sein, dass die Funktion des Netzverteilers ohne Abschaltung beibehalten bleiben kann.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Bei dem erfindungsgemäßen Glasfaser-Netzverteilerschrank sind die Kassettensysteme, d.h. die Spleißkassetten und/oder Patchkassetten und die zugehörigen Halte- und Führungselemente an einer Montageplatte angebracht, die an der Innenseite der Gehäusetür lösbar befestigt ist.

Diese Montageplatte ist bevorzugt an der Gehäusetür angehängt, wozu im oberen Randbereich der Montageplatte Löcher ausgebildet sein können, in die an der Innenseite der Gehäusetür vorstehende Stifte, Haken oder dergleichen eingreifen können. Die Anordnung der Löcher und Haken etc. kann auch umgekehrt getroffen sein. Außerdem kann die Montageplatte bevorzugt an ihrem unteren Endbereich zusätzlich an der Gehäusetür angeschraubt sein.

Außerdem sind Mittel ausgebildet, mit denen die von der Gehäusetür abgenommene Montageplatte an dem Innengerüst oder der rückwärtigen Innenwand lösbar befestigbar ist, vorzugsweise daran aufhängbar ist. Bei den Mitteln kann es sich um zwei Träger handeln, deren Enden in zwei Löcher der Montageplatte eingreifen.

Bei dem erfindungsgemäßen Glasfaser-Netzverteiler kann bei dieser Ausbildung das Außengehäuse bei ununterbrochener Funktion der Glasfaserkabel abgenommen und ausgetauscht werden. Dadurch, dass die Kassettensysteme an der Innenseite der Gehäusetür angebracht sind, können sämtliche Montagearbeiten bei geöffneter Gehäusetür erfolgen, ohne dass diese hin- und hergeschwenkt werden muss, wie dies beim Stand der Technik erforderlich ist. Der gesamte Arbeitsbereich ist gut sichtbar und für alle Montagearbeiten zugänglich. Der Öffnungswinkel der Gehäusetür beträgt vorzugsweise etwa 130°, was das Arbeiten an den Kassettensystemen weiter vereinfacht.

Da der erfindungsgemäße Glasfaser-Netzverteiler keine Innentür mehr enthält, ist er zudem mit geringeren Kosten herstellbar.

Mit besonderem Vorteil ist vorgesehen, dass ein Führungselement für die Glasfaserkabel zwischen der rückwärtigen Innenwand und der Gehäusetür verläuft und bevorzugt mit einem Ende nahe dem Anschlag an der Gehäusetür befestigt ist. Das andere Ende des Führungselementes ist vorzugsweise an oder nahe der rückwärtigen Innenwand angebracht.

Dieses Führungselement ist vorzugsweise durch einen biegsamen Schlauch gebildet, der die eingefädelten Glasfasern so führt, dass ihr zulässiger Biegeradius nicht unterschritten wird. Der Schlauch kann aber auch über seine gesamte Länge geschlitzt sein, so dass die Glasfaserkabel seitlich in den Schlauch eingelegt werden können. Anstelle eines biegsamen Schlauchs kann auch ein anderes Führungselement, z.B. eine Gliederkette, verwendet werden, an der die Glasfaserkabel befestigbar sind.

Der Anschlag der Gehäusetür befindet sich in Blickrichtung zu dem Außengehäuse bevorzugt an der linken Seite. Die schwenkbare Gehäusetür kann aber auch an der anderen Seite angeschlagen sein.

Bei dem erfindungsgemäßen Glasfaser-Netzverteiler sind die Arbeiten des Kassettenmanagements leichter und schneller auszuführen, und der Glasfaser-Netzverteiler hat einen vereinfachten Aufbau mit einem geringeren Gewicht, was zu geringeren Herstellungskosten führt.

Weitere Einzelheiten der Erfindung ergeben sich aus der nachfolgenden Beschreibung einer bevorzugten Ausführungsform sowie anhand der Zeichnungen. Dabei zeigen:
- Figur 1: ein Innengerüst des Glasfaser-Netzverteilers auf einem Sockel und eine Montageplatte in auseinander gezogener Darstellung;
- Figur 2: ein Außengehäuse des Glasfaser-Netzverteilers;
- Figur 3: das Innengerüst und das Außengehäuse im zusammengesetzten Zustand;
- Figur 4: eine Darstellung ähnlich wie Figur 3, mit an der Gehäusetür befestigter Montageplatte und
- Figur 5: die Montageplatte in einem an das Innengerüst angehängten Zustand.

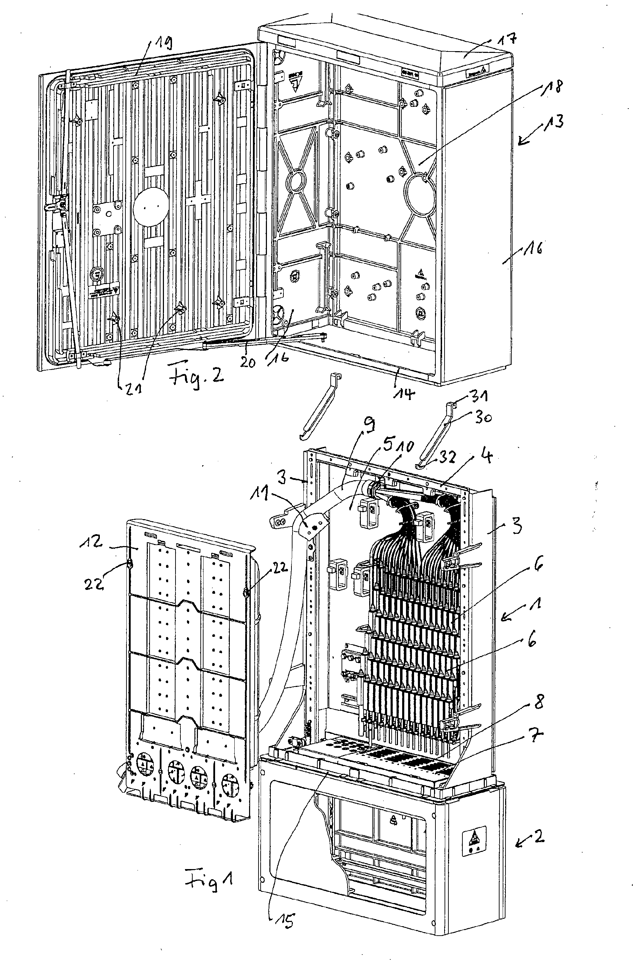

In Figur 1 ist ein Innengerüst 1 auf einem Sockel 2 angeschraubt. Das Innengerüst 1 enthält im wesentlichen zwei schmale Seitenwände 3, die an der Oberseite durch eine Querstrebe 4 verbunden sind, und eine rückwärtige Innenwand 5, an der zahlreiche Kabelführungs- und Halteelemente befestigt sind. Der Sockel 2 ist hohl und hat eine obere Öffnung, die durch eine mit Löchern oder Schlitzen versehende Bodenplatte 7 abgedeckt ist. Aus dem Innenraum des Sockels 2 werden durch die Bodenplatte 7 Glasfaserkabel in den Innenraum des Glasfaser-Netzverteilers zugeführt.

Am oberen Randbereich der Innenwand 5 ist ein biegsamer Schlauch 9 durch eine Halterung 10 befestigt, der über ein Führungselement 11 an der linken Seitenwand 3 des Innengestells 1 zu einer Montageplatte 12 verläuft, die in Figur 1 in einer Rückansicht dargestellt ist. Durch diesen Schlauch werden die zugeführten Glasfaserkabel auf das Kassettensystem verteilt, welches auf der Montageplatte befestigt ist, und dort mit den abgehenden Glasfaserkabeln verspleißt. Die abgehenden Glasfaserkabel werden über den biegsamen Schlauch zurück an die rückwärtige Innenwand geführt und von dort direkt oder in Mikro-Pipes über Halterungen 6 weiter in den Sockel 2 und von dort zu den Verbrauchern geführt.

Ein Außengehäuse 13 wird von oben über das Innengerüst 1 gestülpt und mit seinem unteren Rahmen 14 auf dem Rand 15 des Sockels 2 befestigt. Das Außengehäuse 13 enthält zwei Seitenwände 16, eine obere Wand 17, eine Rückwand 18 und eine schwenkbare Tür 19. Die Tür 19 ist an der linken Seitenwand 16 durch Scharniere angelenkt, wobei ihr Öffnungswinkel durch ein Gestänge 20 auf etwa 130° beschränkt ist.

An der in Figur 2 sichtbaren Innenseite der Gehäusetür 19 wird die Montageplatte 12 mit ihrer in Figur 1 sichtbaren Rückseite befestigt, wozu sich an der Innenseite der Gehäusetür mehrere Befestigungsdome 21 befinden, um die Montageplatte fest zu schrauben. Die Montageplatte 12 hat im oberen Bereich nahe den seitlichen Rändern zudem zwei Löcher 22, um die Montageplatte 12 aufhängen zu können.

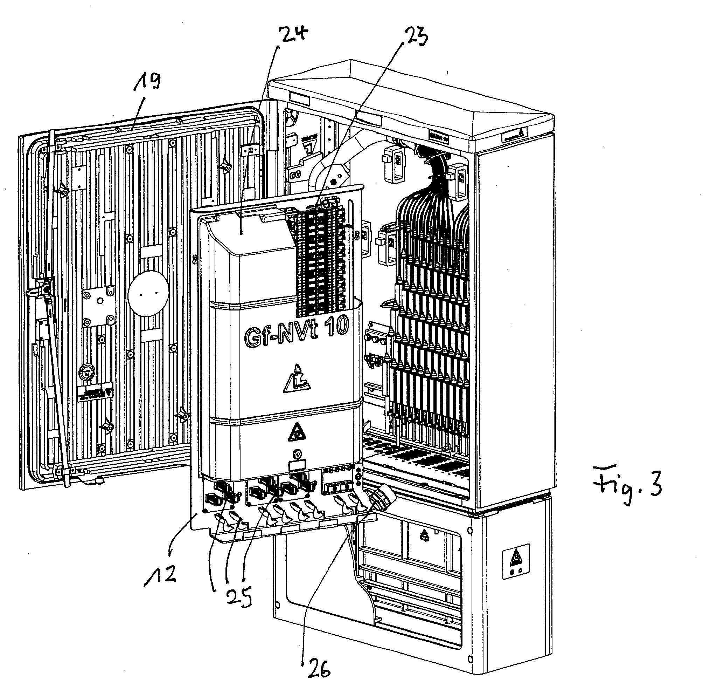

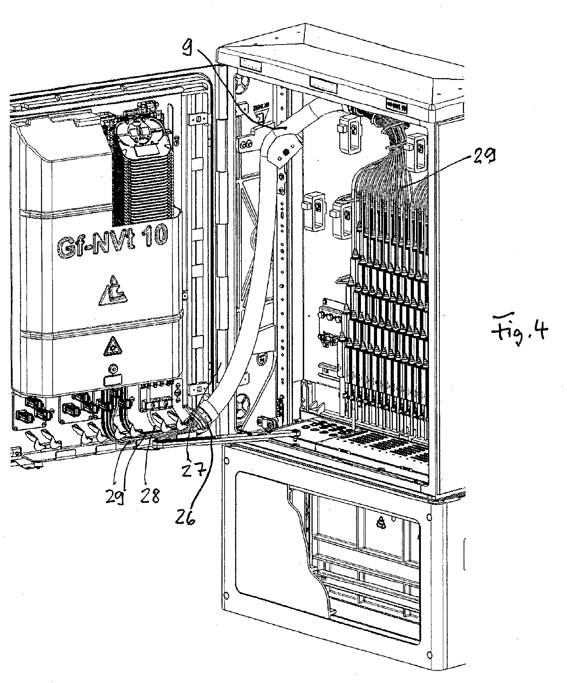

Figur 3 zeigt die Vorderseite der Montageplatte 12, die in dieser Ausrichtung an der Innenseite der Außengehäusetür 19 lösbar befestigt wird. Auf der Montageplatte sind zwei Reihen von Spleißkassetten 23 hinter einer abnehmbaren Abdeckung und zahlreiche Führungs- und Halteelemente 25 sowie eine Halterung 26 zum Befestigen des unteren Endes des biegsamen Schlauchs 9 angebracht. Dieses Befestigungselement 26 für den Schlauch 9 befindet sich nahe dem Scharnier 27 der Gehäusetür 19, so dass der biegsame Schlauch 9 nur eine geringe Schwenkbewegung mit der Gehäusetür 19 bei deren Öffnen und Schließen ausführt. Figur 4 zeigt, dass ein zugeführtes Glasfaserkabel 28 und zahlreiche gespleißte Glasfaserkabel 29 durch den Schlauch 9 verlaufen.

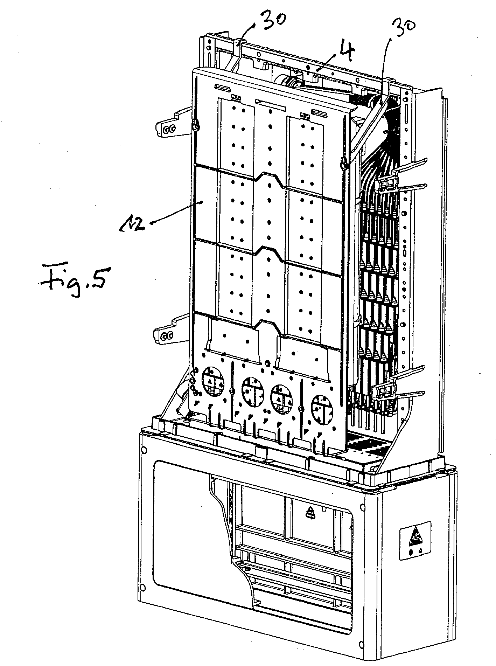

Wenn das Außengehäuse 13 z.B. infolge einer Beschädigung ausgetauscht werden soll, wird die Montageplatte 12 von der Gehäusetür 19 abgenommen und mittels zweier Haltestege 30 an der oberen Querstrebe 4 des Innengerüsts 1 angehängt. Hierzu haben die Haltestege 30 jeweils ein hakenförmiges Ende 31, das dicht die Querstrebe 4 umfasst, und eine aufgebogene Nase 32, die in die Löcher 22 der Montageplatte 12 eingreifen. In dem in Figur 5 dargestellte Zustand ist das Außengehäuse 13 austauschbar.

Aus Figur 4 ist zu ersehen, dass die Montagearbeiten auf einfache Weise ausführbar sind, da die hintere Montageebene an der Innenwand 5 des Innengerüsts 1 und die vordere Montageebene an der Innenseite der Gehäusetür 19 für die Arbeitsperson frei liegen, ohne dass die Tür 19 hierzu verschwenkt werden muss.

## Patentansprüche

1. Glasfaser-Netzverteiler, umfassend
ein Innengerüst (1), das auf einem Sockel (2) angeschraubt ist,
eine Bodenplatte (7),
eine rückwärtige Innenwand (5), an der durch die Bodenplatte (7) zugeführte Glasfaserkabel befestigbar sind, wobei die Glasfaserkabel durch die Bodenplatte (7) in den Sockel (2) weg geführt werden, Kassettensysteme, die Spleißkassetten und/oder Patchkassetten und zugehörige Halte- und Führungselemente umfassen, für das Kassettenmanagement in dem Glasfaser-Netzverteiler,
ein Außengehäuse (13), das zwei Seitenwände (16), eine Rückwand (18), eine obere Wand (17) und eine schwenkbare Gehäusetür (19) enthält und haubenartig über dem Innengerüst (1) und der rückwärtigen Innenwand (5) angeordnet ist,
**dadurch gekennzeichnet,**
**dass** an der Innenseite der Gehäusetür (19) eine Montageplatte (12) lösbar befestigt ist, an der die Spleißkassetten und/oder Patchkassetten und zugehörige Halte- und Führungselemente der Kassettensysteme angebracht sind.

2. Glasfaser-Netzverteiler nach Anspruch 1,
**dadurch gekennzeichnet,**
**dass** ein Führungselement, durch das die Glasfaserkabel verlaufen, von der rückwärtigen Innenwand (5) zu der Gehäusetür (19) verläuft und daran befestigt ist.

3. Glasfaser-Netzverteiler nach Anspruch 2,
**dadurch gekennzeichnet,**
**dass** das Führungselement ein biegsamer Schlauch (9) ist.

4. Glasfaser-Netzverteiler nach einem der Ansprüche 2 oder 3,
**dadurch gekennzeichnet,**
**dass** das türseitige Ende des Führungselements bzw. biegsamen Schlauchs nahe dem Anschlag (27) der Gehäusetür (19) befestigt ist.

5. Glasfaser-Netzverteiler nach einem der Ansprüche 1 bis 4,
**dadurch gekennzeichnet,**
**dass** sich der Anschlag (27) der Gehäusetür (19) in Blickrichtung zu dem Außengehäuse (12) links befindet.

6. Glasfaser-Netzverteiler nach einem der Ansprüche 1 bis 5,
**dadurch gekennzeichnet,**
**dass** der Öffnungswinkel der Gehäusetür (19) etwa 130° beträgt.

7. Glasfaser-Netzverteiler nach einem der Ansprüche 1 bis 6,
**dadurch gekennzeichnet,**
**dass** Mittel vorgesehen sind, mit denen die Montageplatte (12) an der Gehäusetür (19) lösbar angehängt ist.

8. Glasfaser-Netzverteiler einem der Ansprüche 1 bis 7,
**dadurch gekennzeichnet,**
**dass** ferner Mittel ausgebildet sind, mit denen die Montageplatte (12) an dem Innengerüst oder der rückwärtigen Innenwand lösbar befestigbar ist.

9. Glasfaser-Netzverteiler einem der Ansprüche 1 bis 8,
**dadurch gekennzeichnet,**
**dass** die Montageplatte an eine Querstrebe (4) des Innengerüsts (1) anhängbar ist.

10. Glasfaser-Netzverteiler nach einem der Ansprüche 8 oder 9,
**dadurch gekennzeichnet,**
**dass** in dem Zustand, in dem die Montageplatte (12) an dem Innengerüst (1) befestigt ist, das Außengehäuse (13) im funktionsfähigen Zustand des Glasfaser-Netzverteilers demontierbar und gegen ein neues Außengehäuse austauschbar ist.

## Claims

1. Fibre optic network distributor, comprising
an inner frame (1) which is screwed onto a base (2),
a bottom plate (7),
a rear inner wall (5), to which fibre-optic cables fed through the bottom plate (7) can be fastened, the fibre-optic cables being guided through the bottom plate (7) into the base (2), cassette systems that comprise splice cassettes and/or patch cassettes and associated holding and guiding elements, for cassette management in the fibre optic network distributor, and
an outer housing (13) which contains two side walls (16), a rear wall (18), an upper wall (17) and a pivotable housing door (19) and is arranged like a hood over the inner frame (1) and the rear inner wall (5),
**characterised in that** a mounting plate (12) is releasably fastened to the inside of the housing door (19), to which mounting plate the splice cassettes and/or patch cassettes and associated holding and guiding elements of the cassette systems are secured.

2. Fibre optic network distributor according to claim 1, **characterised in that** a guiding element, through which the fibre optic cables extend, extends from the rear inner wall (5) to the housing door (19) and is fastened thereto.

3. Fibre optic network distributor according to claim 2, **characterised in that** the guiding element is a flexible tube (9).

4. Fibre optic network distributor according to either claim 2 or claim 3, **characterised in that** the door-side end of the guiding element or flexible tube is fastened near the stop (27) of the housing door (19).

5. Fibre optic network distributor according to any of claims 1 to 4, **characterised in that** the stop (27) of the housing door (19) is on the left-hand side in the viewing direction towards the outer housing (12).

6. Fibre optic network distributor according to any of claims 1 to 5, **characterised in that** the opening angle of the housing door (19) is approximately 130°.

7. Fibre optic network distributor according to any of claims 1 to 6, **characterised in that** means are provided by means of which the mounting plate (12) is releasably attached to the housing door (19).

8. Fibre optic network distributor according to any of claims 1 to 7, **characterised in that** means are also formed by means of which the mounting plate (12) can be releasably fastened to the inner frame or the rear inner wall.

9. Fibre optic network distributor according to any of claims 1 to 8, **characterised in that** the mounting plate can be attached to a cross strut (4) of the inner frame (1).

10. Fibre optic network distributor according to either claim 8 or claim 9, **characterised in that**, in the state in which the mounting plate (12) is fastened to the inner frame (1), the outer housing (13), in the functional state of the fibre optic network distributor, can be dismounted and exchanged for a new outer housing.

## Revendications

1. Distributeur réseau en fibres de verre, comprenant
une structure intérieure (1), qui est vissée sur un socle (2),
une plaque de fond (7),
une paroi intérieure arrière (5), au niveau de laquelle des câbles en fibres de verre amenés à travers la plaque de fond (7) peuvent être fixés, dans lequel les câbles en fibres de verre sont éloignés dans le socle (2) à travers la plaque de fond (7),
des systèmes de cassettes, qui comprennent des cassettes d'épissure et/ou des cassettes patch et des éléments de maintien et de guidage associés, pour la gestion de cassettes dans le distributeur réseau en fibres de verre,
un boîtier extérieur (13), qui contient deux parois latérales (16), une paroi arrière (18), une paroi supérieure (17) et une porte de boîtier (19) pouvant pivoter et est disposé à la manière d'un capot par-dessus la structure intérieure (1) et la paroi intérieure arrière (5),
**caractérisé en ce**
**qu'**est fixée de manière amovible au niveau du côté intérieur de la porte de boîtier (19) une plaque de montage (12), au niveau de laquelle sont installés les cassettes d'épissure et/ou les cassettes patch et des éléments de maintien et de guidage associés des systèmes de cassettes.

2. Distributeur réseau en fibres de verre selon la revendication 1,
**caractérisé en ce**
**qu'**un élément de guidage, à travers lequel s'étendent les câbles en fibres de verre, s'étend de la paroi intérieure arrière (5) à la porte de boîtier (19) et y est fixé.

3. Distributeur réseau en fibres de verre selon la revendication 2,
**caractérisé en ce**
**que** l'élément de guidage est un tuyau flexible (9) souple.

4. Distributeur réseau en fibres de verre selon l'une quelconque des revendications 2 ou 3,
**caractérisé en ce**
**que** l'extrémité côté porte de l'élément de guidage ou du tuyau flexible souple est fixée à proximité de la butée (27) de la porte de boîtier (19).

5. Distributeur réseau en fibres de verre selon l'une quelconque des revendications 1 à 4,
**caractérisé en ce**
**que** la butée (27) de la porte de boîtier (19) se trouve à gauche dans le sens d'observation par rapport au boîtier extérieur (12).

6. Distributeur réseau en fibres de verre selon l'une quelconque des revendications 1 à 5,
**caractérisé en ce**
**que** l'angle d'ouverture de la porte de boîtier (19) est d'environ 130°.

7. Distributeur réseau en fibres de verre selon l'une quelconque des revendications 1 à 6,
**caractérisé en ce**
**que** sont prévus des moyens, avec lesquels la plaque de montage (12) est attachée de manière amovible au niveau de la porte de boîtier (19).

8. Distributeur réseau en fibres de verre selon l'une quelconque des revendications 1 à 7,
**caractérisé en ce**
**qu'**en outre sont réalisés des moyens, avec lesquels la plaqué de montage (12) peut être fixée de manière amovible au niveau de la structure intérieure ou au niveau de la paroi intérieure arrière.

9. Distributeur réseau en fibres de verre selon l'une quelconque des revendications 1 à 8,
**caractérisé en ce**
**que** la plaque de montage peut être attachée au niveau d'une entretoise transversale (4) de la structure intérieure (1).

10. Distributeur réseau en fibres de verre selon l'une quelconque des revendications 8 ou 9,
**caractérisé en ce**
**que** dans l'état, dans lequel la plaque de montage (12) est fixée au niveau de la structure intérieure (1), le boîtier extérieur (13) peut être démonté dans l'état fonctionnel du distributeur réseau en fibres de verre et peut être échangé contre un nouveau boîtier extérieur.
